# EUROPEAN PATENT SPECIFICATION

(11) **EP 3 231 638 B1**
(45) Date of publication and mention of the grant of the patent: **03.06.2020**
(21) Application number: 15867313.7
(22) Date of filing: 26.11.2015
(51) Int. Cl.: B60C 11/03, B60C 11/13

(54) **PNEUMATIC TIRE**
LUFTREIFEN
PNEU

(30) Priority: 11.12.2014 JP 2014251028
(43) Date of publication of application: 18.10.2017
(73) Proprietor: The Yokohama Rubber Co., Ltd., Minato-ku Tokyo 105-8685 (JP)
(72) Inventor: NAITO, Mitsuru, Hiratsuka-shi Kanagawa 254-8601 (JP); MORITO, Takumi, Tokyo 105-8685 (JP)
(74) Representative: Dilg, Haeusler, Schindelmann Patentanwaltsgesellschaft mbH
(86) International application number: PCT/JP2015/083197
(87) International publication number: WO 2016/093069

(56) References cited:
- JP-A- H0 490 904
- JP-A- S6 012 318
- JP-A- S6 012 318
- JP-A- S60 139 504
- JP-A- S60 139 504
- JP-A- 2001 253 212
- JP-A- 2006 076 520
- JP-A- 2012 158 233
- US-A- 2 575 439
- US-A- 3 848 651

## Description

### Technical Field

The present invention relates to a pneumatic tire suitable for rallycross use and relates more particularly to a pneumatic tire that, while ensuring a favorable drainage performance, enables exhibition of an excellent driving performance on both road surfaces of a paved road and an unpaved road.

### Background Art

Rallycross is an automotive competition that takes place on a course combining a tarmac road surface (paved road) and a dirt road surface (unpaved road). As a pneumatic tire used for rallying that takes place on a tarmac road surface (paved road), a pneumatic tire has been proposed in which a plurality of both-end closed lug grooves is provided in a tread portion with the lug grooves being disposed over the entire area of the tread portion (refer to Patent Documents 1 and 2, for example).

However, in a situation where a tread pattern whose main body is the lug groove with both ends closed is adopted in the pneumatic tire used in rallycross, it is difficult to provide a high level of both a drainage performance and a driving performance, and there is a demand for improvement here. Particularly, when the drainage performance is dependent solely on the lug groove, a circumferential rigidity of the tread portion decreases, decreasing the driving performance.

Furthermore, in rallycross, a tire of a bias structure is often used due to favorable acceleration when starting (starting dash), but in recent years, use of a tire of a radial structure is in demand to improve steering stability. However, because the tire of the radial structure has a lower circumferential rigidity than the tire of the bias structure, it is feared that if the driving performance, which is based on the tread portion, is insufficient, there will be a disadvantage in terms of acceleration when starting.

Patent document US 3 848 651 describes a pneumatic tire with a circumferential groove formed on each side of the tire centreline in the tread portion and with a plurality of lug grooves disposed on both sides of each circumferential groove.

### Citation List

### Patent Literature

Patent Document 1: Japanese Unexamined Patent Application Publication No. 2012-158233A
Patent Document 2: Japanese Unexamined Patent Application Publication No. 2012-218515A

### Summary of Invention

### Technical Problem

An object of the present invention is to provide a pneumatic tire that, while ensuring a favorable drainage performance, enables exhibition of an excellent driving performance on both road surfaces of a paved road and an unpaved road.

### Solution to Problem

A pneumatic tire of the present invention for achieving the object above is a pneumatic tire according to claim 1.

### Advantageous Effects of Invention

In the present invention, because the plurality of lug grooves with both ends closed extending in the tire width direction is scattered along the tire circumferential direction on both sides of the circumferential groove in the tread portion, a driving force acting in the tire circumferential direction can be transferred effectively to a road surface based on an edge effect of the lug groove. Particularly, because both ends of the lug groove are closed, excessive deformation of the tread portion is suppressed and grip on a paved road can be exhibited efficiently. Moreover, the circumferential groove having a structure of being displaced periodically in the tire width direction while extending continuously along the tire circumferential direction, in addition to contributing greatly to improving a drainage performance, contributes to improving a driving performance by an edge portion thereof exhibiting an edge effect in conjunction with tire rotation. Therefore, by providing both the circumferential groove and the lug groove described above in the tread portion, an excellent driving performance can be exhibited on both road surfaces of the paved road and an unpaved road while ensuring a favorable drainage performance.

Furthermore, because a circumferential rigidity of the tread portion decreases when it is attempted to ensure the drainage performance by depending solely on the lug groove with both ends closed extending in the tire width direction, in a situation where such a tread pattern is applied to a tire of a radial structure, it is feared that acceleration when starting (starting dash) in a competition such as rallycross will worsen; however, by providing both the circumferential groove and the lug groove described above in the tread portion, the circumferential rigidity of the tread portion increases, which enables improvement of acceleration when starting in the competition such as rallycross.

In the present invention, an inclination angle of the lug grooves with respect to the tire circumferential direction is preferably set to 70° to 90°. By this, the driving performance can be improved effectively based on the edge effect of the lug groove.

In the present invention, a position of the lug grooves in the tire width direction is displaced periodically along the tire circumferential direction and a period of displacement of the lug grooves is synchronized with a period of displacement of the circumferential groove. By this, a rigidity of the tread portion decreasing locally due to the lug grooves and the circumferential groove being near each other can be avoided and the edge effect of the lug groove being limited only to a specified position in the tire width direction can be avoided, which results in being able to effectively improve the driving performance.

In the present invention, the circumferential grooves and the lug grooves are respectively disposed on both sides of a centerline in the tread portion, the period of displacement of the circumferential groove is shifted between both sides of the centerline, and a shift amount of this period is 25% to 33% of the period. By this, the lug groove is disposed without bias along the tire circumferential direction, which enables effective improvement of the driving performance.

It is preferable to dispose the lug grooves so an arbitrary lug groove overlaps at least one other lug groove when the lug grooves are projected in the tire circumferential direction and this arbitrary lug groove overlaps at least one other lug groove when the lug grooves are projected in the tire width direction. By making overlaps of the lug grooves when the lug grooves are projected in the tire circumferential direction in this manner, continuity of a drainage effect in the tire width direction is ensured, and by making overlaps of the lug grooves when the lug grooves are projected in the tire width direction in this manner, continuity of the edge effect in the tire circumferential direction is ensured; this enables both the driving performance and the drainage performance to be provided.

It is preferable for a ratio of a total area of the circumferential groove and the lug groove relative to an area of a ground contact region of the tread portion to be in a range of 10% to 30%. By this, the rigidity of the tread portion can be ensured sufficiently while ensuring the drainage performance.

It is preferable to dispose a lug groove facing a valley portion of the circumferential groove and a lug groove facing a peak portion of the circumferential groove in each inflection position of this circumferential groove and have the lug groove facing the valley portion be nearer to the circumferential groove than the lug groove facing the peak portion. By this, even in a situation where the positions of the lug grooves are dispersed in the tire width direction, the lug groove and the circumferential groove being too near each other can be avoided to keep local rigidity reduction of the tread portion minimal, which enables favorable steering stability to be ensured.

It is preferable for an inclination angle of a groove wall surface of the circumferential groove relative to a normal direction of a tread surface of the tread portion to be locally greater than another part at a part near the lug groove. By locally increasing the inclination angle of the groove wall surface of the circumferential groove at the part near the lug groove in this manner, rigidity reduction of the tread portion at a part where the lug groove and the circumferential groove are near each other can be kept minimal, which enables favorable steering stability to be ensured.

In the present invention, the tire ground contact width is the ground contact width in the tire axial direction as measured when the tire is mounted on a regular rim and inflated to a regular internal pressure, and placed vertically upon a flat surface with a regular load applied thereto. "Regular rim" is a rim defined by a standard for each tire according to a system of standards that includes standards on which tires are based, and refers to a "standard rim" in the case of Japan Automobile Tyre Manufacturers Association (JATMA), refers to a "design rim" in the case of Tire and Rim Association (TRA), and refers to a "measuring rim" in the case of European Tyre and Rim Technical Organisation (ETRTO). "Regular internal pressure" is the air pressure defined by standards for each tire according to a system of standards that includes standards on which tires are based, and refers to a "maximum air pressure" in the case of JATMA, refers to the maximum value in the table of "TIRE ROAD LIMITS AT VARIOUS COLD INFLATION PRESSURES" in the case of TRA, and refers to the "inflation pressure" in the case of ETRTO. "Regular internal pressure" is 180 kPa for a tire on a passenger vehicle. "Regular load" is the load defined by standards for each tire according to a system of standards that includes standards on which tires are based, and refers to a "maximum load capacity" in the case of JATMA, refers to the maximum value in the table of "TIRE LOAD LIMITS AT VARIOUS COLD INFLATION PRESSURES" in the case of TRA, and refers to "LOAD CAPACITY" in the case of ETRTO. However, for a passenger vehicle tire, the "regular load" is 88% of the loads described above.

### Brief Description of Drawings

- FIG. 1: is a meridian cross-sectional view illustrating a pneumatic tire according to an embodiment of the present invention.
- FIG. 2: is a developed view illustrating a tread pattern of the pneumatic tire of FIG. 1.
- FIG. 3: is a another developed view illustrating a tread pattern of the pneumatic tire of FIG. 1.
- FIG. 4: is an enlarged plan view illustrating the main constituents of the tread pattern of the pneumatic tire illustrated in FIG. 2.
- FIG. 5: is a cross-sectional view at the arrow V-V of FIG. 4.
- FIG. 6: is a cross-sectional view at the arrow VI-VI of FIG. 4.
- FIG. 7: is a development view illustrating the tread pattern of the pneumatic tire of the conventional example.

### Description of Embodiments

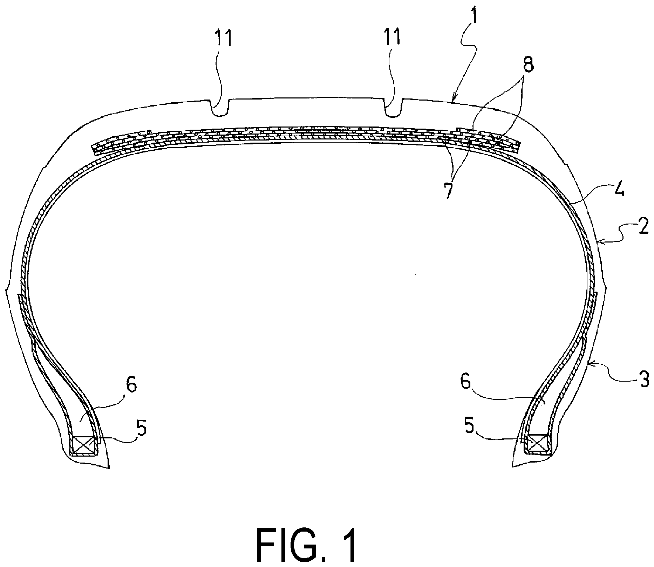

A configuration of the present invention will be described below in detail with reference to the accompanying drawings. FIGS. 1 to 3 illustrate a pneumatic tire according to an embodiment of the present invention. As illustrated in FIGS. 1 to 3, the pneumatic tire according to the present embodiment is provided with an annular-shaped tread portion 1 extending in the tire circumferential direction, a pair of side wall portions 2, 2 disposed on both sides of the tread portion 1, and a pair of bead portions 3, 3 disposed on an inner side of the side wall portion 2 in the tire radial direction.

A carcass layer 4 is mounted between the pair of bead portions 3, 3. The carcass layer 4 includes a plurality of reinforcing cords extending in a tire radial direction, and is folded back around a bead core 5 disposed in each bead portion 3 from a tire inner side to a tire outer side. In the carcass layer 4, the inclination angle of the reinforcing cords with respect to the tire circumferential direction is set in a range from, for example, 65° to 90°. That is, this pneumatic tire has a radial structure or a half-radial structure similar thereto. A bead filler 6 having a triangular cross-sectional shape formed from rubber composition is disposed on a periphery of the bead core 5.

Meanwhile, a plurality of belt layers 7 is embedded to an outer circumferential side of the carcass layer 4 in the tread portion 1. These belt layers 7 include a plurality of reinforcing cords that incline with respect to the tire circumferential direction and the direction of the reinforcing cords of the different layers intersect each other. In the belt layers 7, the inclination angle of the reinforcing cords with respect to the tire circumferential direction is set in a range from, for example, 10° to 40°. Steel cords are preferably used as the reinforcing cords of the belt layers 7. For the purpose of enhancing high-speed durability, at least one layer of a belt cover layer 8 formed by arranging reinforcing cords at an angle of, for example, not greater than 5° with respect to the tire circumferential direction, is disposed on an outer circumferential side of the belt layers 7. Nylon, aramid, or similar organic fiber cords are preferably used as the reinforcing cords of the belt cover layer 8.

Note that the tire internal structure described above is exemplary of a pneumatic tire, but is not limited thereto.

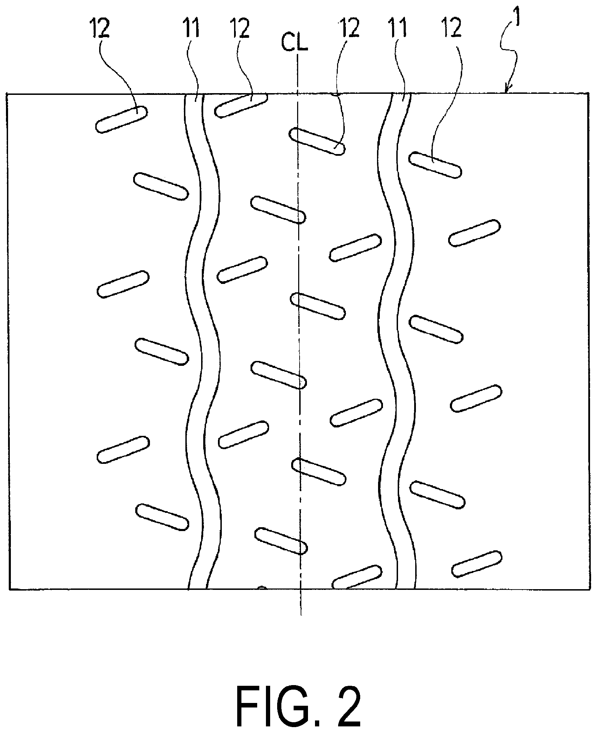

In FIG. 2, CL is a tire centerline. As illustrated in FIG. 2, one circumferential groove 11 is formed on both sides of the tire centerline CL in the tread portion 1. Each circumferential groove 11 is displaced periodically in a tire width direction while extending continuously along the tire circumferential direction. That is, each circumferential groove 11 forms a wave shape along the tire circumferential direction. Moreover, a plurality of lug grooves 12 with both ends closed extending in the tire width direction is disposed in the tread portion 1 so as to be scattered along the tire circumferential direction on both sides of each circumferential groove 11. It is sufficient for a disposition count of the lug groove 12 in the tread portion 1 to be, for example, 168 to 308. While it is preferable for each lug groove 12 to be rectilinear as illustrated, each lug groove 12 may have a bent shape or a curved shape. However, in any of these situations, both end portions of each lug groove 12 are closed and each lug groove 12 has a structure independent from the other grooves.

According to the pneumatic tire described above, because the plurality of lug grooves 12 with both ends closed extending in the tire width direction is scattered along the tire circumferential direction on both sides of the circumferential groove 11 in the tread portion 1, a driving force that acts in the tire circumferential direction when the tire rotates can be transferred effectively to a road surface based on an edge effect of the lug groove 12. Particularly, because both ends of the lug groove 12 are closed, excessive deformation of the tread portion 1 is suppressed and grip on a paved road can be exhibited efficiently. Moreover, the circumferential groove 11 contributes greatly to improving a drainage performance by extending continuously along the tire circumferential direction, but because the circumferential groove 11 is displaced periodically in the tire width direction forming the wave shape, an edge portion thereof exhibits an edge effect in conjunction with tire rotation, which also contributes to a driving performance. Therefore, by providing both the circumferential groove 11 and the lug groove 12 described above in the tread portion 1, an excellent driving performance can be exhibited on both road surfaces of the paved road and an unpaved road while ensuring a favorable drainage performance. The pneumatic tire configured in this manner can exhibit an excellent running performance in rallycross, which takes place on a course combining a tarmac road surface (paved road) and a dirt road surface (unpaved road).

Now, in a case where the drainage performance is attempted to be ensured by, as is done conventionally, depending solely on the lug groove with both ends closed extending in the tire width direction, a circumferential rigidity of the tread portion 1 decreases; in a situation where such a tread pattern is applied to the pneumatic tire of the radial structure, it is feared that acceleration when starting (starting dash) in a competition such as rallycross will worsen. However, because providing both the wave-shaped circumferential groove 11 and the lug groove 12 having a closed structure described above in the tread portion 1 increases the circumferential rigidity of the tread portion 1, acceleration when starting in the competition such as rallycross can be improved.

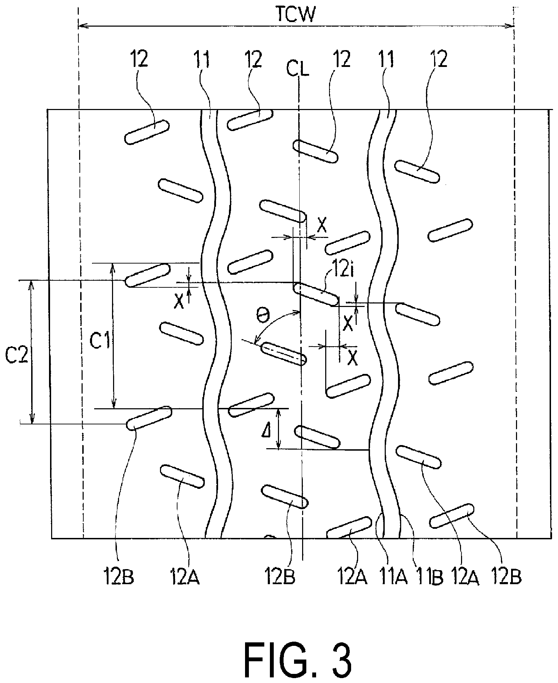

In the pneumatic tire above, as illustrated in FIG. 3, it is sufficient for an inclination angle θ of the lug groove 12 relative to the tire circumferential direction to be 70° to 90°. By this, the driving performance can be improved effectively based on the edge effect of the lug groove 12. Here, when the inclination angle θ of the lug groove 12 is less than 70°, an effect of effectively transferring the driving force that acts in the tire circumferential direction to the road surface based on the edge effect of the lug groove 12 decreases. Moreover, as illustrated, in a situation where an incline direction of the lug groove 12 relative to the tire width direction varies alternatingly along the tire circumferential direction, the driving performance can be improved effectively.

In the pneumatic tire above, the circumferential groove 11 is displaced periodically in the tire width direction while extending continuously along the tire circumferential direction, but a period C1 thereof can be set to a range of, for example, 2% to 5% of a tire circumference. Here, the period C1 of the circumferential groove 11 is specified based on a change in distance between the tire centerline CL, which is parallel to the tire circumferential direction, and the circumferential groove 11. The distance between the tire centerline CL and the circumferential groove 11 increases and decreases repeatedly along the tire circumferential direction; one period is defined as being, for example, from a position where this distance reaches a maximum value, passing a position where this distance reaches a minimum value, to a position where this distance once again reaches a maximum value.

Furthermore, it is desirable for a position of the lug groove 12 in the tire width direction to also be displaced periodically along the tire circumferential direction. In FIG. 3, the position in the tire width direction of the lug groove 12 positioned on one side of the circumferential groove 11 is displaced along the tire circumferential direction; it is sufficient for a period C2 of such displacement of the lug groove 12 to be synchronized with the period C1 of displacement of the circumferential groove 11. That is, by matching the period C1 of displacement of the circumferential groove 11 and the period C2 of displacement of the lug groove 12 to each other, it becomes possible to sufficiently maintain the distance of the lug groove 12 relative to this circumferential groove 11 even if the circumferential groove 11 meanders. By this, the rigidity of the tread portion 1 decreasing locally due to the lug groove 12 and the circumferential groove 11 being near each other is avoided and the edge effect of the lug groove 12 being limited to a specified position in the tire width direction is avoided; as a result, the driving performance can be improved effectively.

In the pneumatic tire above, the circumferential groove 11 and the lug groove 12 are respectively disposed on both sides of the tire centerline CL in the tread portion 1; in this situation, as illustrated in FIG. 3, it is sufficient to shift the period C1 of displacement of the circumferential groove 11 between both sides of the tire centerline CL and make a shift amount Δ of this period C1 to be 25% to 33% of the period C1. By this, the lug groove 12, which accompanies the circumferential groove 11, is disposed without bias along the tire circumferential direction, which enables effective improvement of the driving performance. When the shift amount Δ of the period C1 of the circumferential groove 11 on both sides of the tire centerline CL falls outside of the range above, an effect of dispersing the position of the lug groove 12 decreases.

In the pneumatic tire above, it is desirable to dispose the lug groove 12 so, when any lug groove 12i is selected from among all lug grooves 12 disposed in the tread portion 1, this lug groove 12i overlaps at least one other lug groove 12 when all lug grooves 12 are projected in the tire circumferential direction and so this lug groove 12i overlaps at least one other lug groove 12 when all lug grooves are projected in the tire width direction. In FIG. 3, this lug groove 12i overlaps lug grooves 12 on both sides in the tire width direction and overlaps lug grooves 12 on both sides in the tire circumferential direction. It is sufficient for an overlap X between this lug groove 12i and the other lug groove 12 to be 0 mm or greater, but this overlap X is preferably 1.0 mm to 5.0 mm. Such an overlap relationship is satisfied even in a situation where any lug groove 12 is treated as this lug groove 12i. By disposing the lug groove 12 in this manner so the lug grooves 12 overlap each other when projected in the tire circumferential direction, continuity of a drainage effect in the tire width direction can be ensured. Moreover, by disposing the lug groove 12 so the lug grooves 12 overlap each other when projected in the tire width direction, continuity of the edge effect in the tire circumferential direction can be ensured. As a result, both the driving performance and the drainage performance can be provided.

In the pneumatic tire above, it is favorable for a ratio (groove-area ratio) of a total area of the circumferential groove 11 and the lug groove 12 relative to an area of a ground contact region (region surrounded by the pair of dashed lines) specified by a ground width TCW of the tread portion 1 to be in a range of 10% to 30%. By this, the rigidity of the tread portion 1 can be ensured sufficiently while ensuring the drainage performance. When this groove-area ratio is too small, the drainage performance decreases; conversely, when this groove-area ratio is too large, the rigidity of the tread portion 1 decreases such that the driving performance becomes insufficient. Particularly, in the pneumatic tire for rallycross use, it is desirable to make the ratio of the total area of the circumferential groove 11 and the lug groove 12 relative to the area of the ground contact region specified by the ground width TCW of the tread portion 1 to be in a range of 17% to 20% so as to sufficiently ensure the rigidity of the tread portion 1.

In the pneumatic tire above, as illustrated in FIG. 3, a lug groove 12A facing a valley portion 11A of the circumferential groove 11 and a lug groove 12B facing a peak portion 11B of the circumferential groove 11 are disposed in each inflection position of the circumferential groove 11. In this situation, it is desirable for the lug groove 12A facing the valley portion 11A to be nearer to the circumferential groove 11 than the lug groove 12B facing the peak portion 11B. By this, the lug groove 12 and the circumferential groove 11 being too near each other can be avoided even in a situation where the position of the lug groove 12 is dispersed in the tire width direction. That is, while the lug groove 12A and the lug groove 12B, which are adjacent in the tire circumferential direction, are disposed in positions shifted in the tire width direction, local rigidity reduction of the tread portion 1 can be kept minimal because the lug groove 12A near the circumferential groove 11 faces the valley portion 11A of the circumferential groove 11. As a result, favorable steering stability can be ensured. Note that the valley portion 11A and the peak portion 11B of the circumferential groove 11 signify a range of ±5% of the period C1 heading in the tire circumferential direction from the inflection position with this inflection position of the circumferential groove 11 as a center.

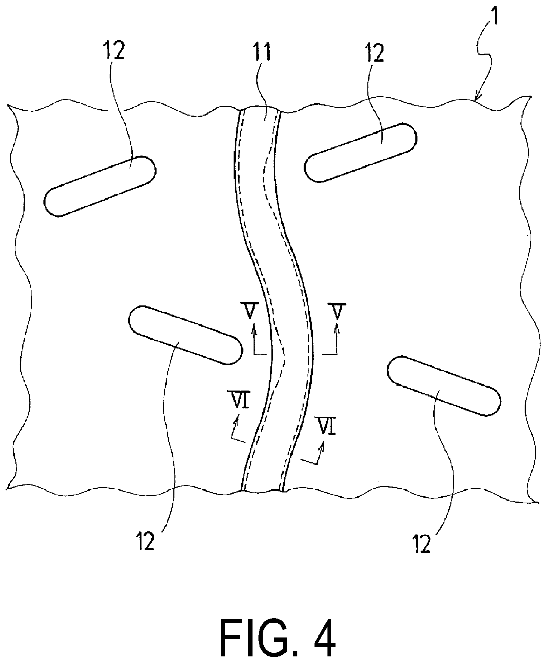

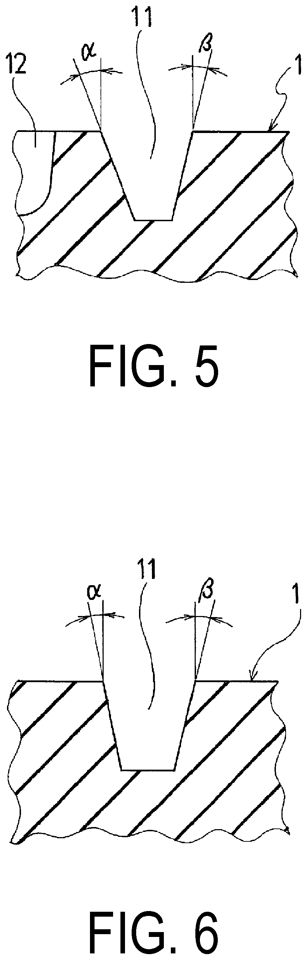

In the pneumatic tire above, as illustrated in FIG. 4 to FIG. 6, it is favorable for an inclination angle of a groove wall surface of the circumferential groove 11 relative to a normal direction of a tread surface of the tread portion 1 to be greater locally than another part at a part near the lug groove 12. In FIG. 4, whereas an outline of the circumferential groove 11 at the tread surface is depicted by a solid line, an outline of the circumferential groove 11 at a groove bottom is depicted by a dashed line. As illustrated in FIG. 5, the inclination angle of the groove wall surface on one side of the circumferential groove 11 is defined as α and the inclination angle of the groove wall surface on another side of the circumferential groove 11 is defined as β, the inclination angle α of the groove wall surface on the one side, which is relatively near the lug groove 12, is made to be greater than the inclination angle β of the groove wall surface on the other side. Moreover, as illustrated in FIG. 6, in a part where no lug groove 12 is disposed, both the inclination angle α of the groove wall surface on the one side and the inclination angle β of the groove wall surface on the other side of the circumferential groove 11 are made to be small. As a result, as illustrated in FIG. 4, the outline of the circumferential groove 11 at the groove bottom meanders so as to be locally separated from the outline at the tread surface at the part near the lug groove 12. By locally increasing the inclination angle of the groove wall surface of the circumferential groove 11 at the part near the lug groove 12 in this manner, rigidity reduction of the tread portion 1 at the part where the lug groove 12 and the circumferential groove 11 are near each other can be kept minimal, which enables favorable steering stability to be ensured.

### Examples

Tires of a conventional example, Comparative Example 1, and Examples 1 to 10 are manufactured where only a tread pattern is varied in a pneumatic tire having a half-radial structure whose tire size is 230/640R17 and an inclination angle of a carcass cord relative to a tire circumferential direction is set to be 70°.

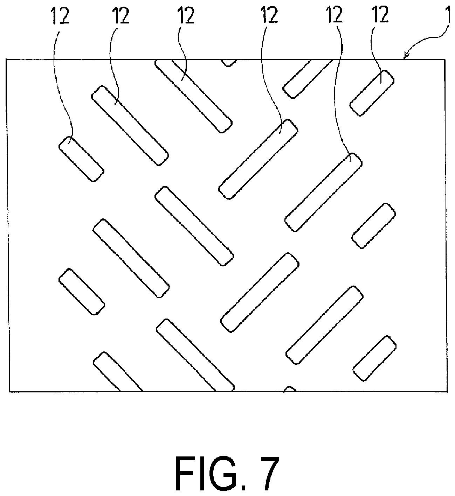

For comparison, as illustrated in FIG. 7, a tire for a Conventional Example 1 was prepared in which a plurality of lug grooves was provided, in a tread portion, both ends of which were closed while being inclined with respect to the tire circumferential direction. The tire of Comparative Example 1 is provided with two circumferential grooves extending rectilinearly along the tire circumferential direction in the tread portion and has a plurality of lug grooves with both ends closed extending in a tire width direction scattered along the tire circumferential direction on both sides of the circumferential groove in the tread portion. That is, the tire of Comparative Example 1 has the circumferential groove of the tread pattern in FIG. 2 extending rectilinearly.

Meanwhile, as illustrated in FIG. 2, the tires of Examples 1 to 10 are provided with two circumferential grooves that are displaced periodically in a tire width direction while extending continuously along a tire circumferential direction in a tread portion and have a plurality of lug grooves with both ends closed extending in the tire width direction scattered along the tire circumferential direction on both sides of the circumferential groove in the tread portion. A position of the lug groove in the tire width direction is displaced periodically along the tire circumferential direction, and a period of displacement of the lug groove is synchronized with a period of displacement of the circumferential groove. A lug groove facing a valley portion of the circumferential groove and a lug groove facing a peak portion of the circumferential groove are disposed in each inflection position of this circumferential groove, and the lug groove facing the valley portion is nearer to the circumferential groove than the lug groove facing the peak portion.

In Examples 1 to 10, an inclination angle θ of the lug groove relative to the tire circumferential direction, a shift amount Δ of the period of the circumferential groove between both sides of a tire centerline, a ratio (groove-area ratio) of a total area of the circumferential groove and the lug groove relative to an area of a ground contact region of the tread portion, and an inclination angle of a groove wall surface of the circumferential groove are set according to Table 1. For the inclination angle of the groove wall surface of the circumferential groove, the inclination angle of the groove wall surface being made to be constant (15°) is denoted as "constant" and the inclination angle of the groove wall surface being set to be a large value (20°) at a part near the lug groove but being set to be a small value (11°) at another part is denoted as "varied."

Drainage performance and noise performance for these test tires were evaluated according to the following methods and the results were recorded in Table 1. Each of the evaluations was conducted under conditions in which the test tire was assembled to a wheel having the rim size of 17 x 8JJ and mounted to a four-wheel drive vehicle of 2000 cc displacement, and the air pressure after warm-up was set at 200 kPa.

### Driving performance:

A running test by a test driver is carried out on a course including 40% unpaved road and 60% paved road, and a sensory evaluation of a driving performance at this time was made Evaluation results are expressed by an index where the conventional example is 100. Larger index values indicate superior driving performance.

### Drainage performance:

A running test by a test driver is carried out on a course including 40% unpaved road and 60% paved road under conditions where a road surface is placed in a wet state, and a sensory evaluation of a drainage performance at this time was made. Evaluation results are expressed by an index where the conventional example is 100. Larger index values indicate superior drainage performance.

**[Table 1]**

| | Conventional Example | Comparative Example 1 | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Lug groove inclination angle (°) | 40 | 72 | 72 | 60 | 90 | 72 | 72 | 72 | 72 | 72 | 72 | 72 |
| Shift amount Δ (%) of period of circumferential groove | - | - | 28 | 28 | 28 | 0 | 25 | 33 | 50 | 28 | 28 | 28 |
| Groove area ratio (%) | - | - | 18 | 18 | 18 | 18 | 18 | 18 | 18 | 10 | 30 | 18 |
| Inclination angle of groove wall surface of circumferential groove | - | - | Constant | Constant | Constant | Constant | Constant | Constant | Constant | Constant | Constant | Varied |
| Driving performance (index) | 100 | 103 | 109 | 105 | 110 | 108 | 110 | 110 | 108 | 115 | 103 | 112 |
| Drainage performance (index) | 100 | 104 | 105 | 105 | 104 | 105 | 105 | 105 | 105 | 101 | 110 | 105 |

As evident from this Table 1, the tires of Examples 1 to 10 were able to obtain a drainage performance in contrast with the conventional example and were able to exhibit an excellent driving performance on both road surfaces of the paved road and the unpaved road. Meanwhile, because the tire of Comparative Example 1 is provided with the circumferential groove extending rectilinearly along the tire circumferential direction in the tread portion, an improvement effect of a drainage performance and a driving performance was insufficient.

### Reference Signs List

- 1: Tread portion
- 2: Sidewall portion
- 3: Bead portion
- 11: Circumferential groove
- 12: Lug groove

## Claims

1. A pneumatic tire, comprising:
a tread portion (1) extending in a tire circumferential direction to form an annular shape;
a pair of sidewall portions (2) disposed on both sides of the tread portion (1); and
a pair of bead portions (3) disposed on a tire-radial-direction inner side of the sidewall portions (2); wherein
one circumferential groove (11) is formed on both sides of the tire centerline (CL) in the tread portion (1), wherein each circumferential groove (11), while extending continuously in the tire circumferential direction, is displaced periodically in a tire width direction and
a plurality of lug grooves (12) with both ends closed extending in the tire width direction is scattered along the tire circumferential direction on both sides of each circumferential groove (11) in the tread portion (1), wherein
a position of the lug grooves (12) in the tire width direction is displaced periodically along the tire circumferential direction and a period of displacement (C₂) of the lug grooves (12) is synchronized with a period of displacement (C₁) of the circumferential grooves (11),
**characterized in that**
the circumferential grooves (11) and the lug grooves (12) are respectively disposed on both sides of a centerline in the tread portion (1), the period of displacement of the circumferential grooves (11) is shifted between both sides of the centerline, and a shift amount (Δ) of this period is made to be 25% to 33% of the period.

2. The pneumatic tire according to claim 1, wherein
an inclination angle of the lug grooves (12) with respect to the tire circumferential direction is within a range of 70° to 90°. PS:SW:nn

3. The pneumatic tire according to claim 1 or 2, wherein
the lug grooves (12) are disposed so that an arbitrary lug groove (12) overlaps at least one other lug groove (12) when the lug grooves (12) are projected in the tire circumferential direction and so that the arbitrary lug groove (12) overlaps at least one other lug groove (12) when the lug grooves (12) are projected in the tire width direction.

4. The pneumatic tire according to any one of claims 1 to 3, wherein
a ratio of a total area of the circumferential grooves (11) and the lug grooves (12) relative to an area of a ground contact region of the tread portion (1) is in a range of 10% to 30%.

5. The pneumatic tire according to any one of claims 1 to 4, wherein
a lug groove (12) facing a valley portion of the circumferential groove (11) and a lug groove (12) facing a peak portion of the circumferential groove (11) are disposed in each inflection position of the circumferential groove (11) and the lug groove (12) facing the valley portion is nearer to the circumferential groove (11) than the lug groove (12) facing the peak portion.

6. The pneumatic tire according to claim 5, wherein
an inclination angle of a groove wall surface of the circumferential groove (11) relative to a normal direction of a tread surface of the tread portion (1) is greater locally than another part at a part near the lug groove (12).

## Patentansprüche

1. Luftreifen, umfassend:
einen Laufflächenabschnitt (1), der sich in einer Reifenumfangsrichtung erstreckt, um eine Ringform zu bilden;
ein Paar von Seitenwandabschnitten (2), die auf beiden Seiten des Laufflächenabschnitts (1) angeordnet sind; und
ein Paar von Wulstabschnitten (3), die in einer Reifenradialrichtung auf der Innenseite der Seitenwandabschnitte (2) angeordnet sind; wobei
eine Umfangsrille (11) auf beiden Seiten der Reifenmittellinie (CL) im Laufflächenabschnitt (1) gebildet wird, wobei jede Umfangsrille (11), während sie kontinuierlich in Reifenumfangsrichtung verläuft, regelmäßig in einer Reifenbreitenrichtung verschoben wird, und
eine Vielzahl von Stollenrillen (12) mit beidseitig geschlossenen Enden, die in Reifenbreitenrichtung verlaufen, entlang der Reifenumfangsrichtung auf beiden Seiten jeder der Umfangsrille (11) im Laufflächenabschnitt (1) gestreut sind, wobei
eine Position der Stollenrillen (12) in Reifenbreitenrichtung regelmäßig entlang der Reifenumfangsrichtung verschoben wird und eine Dauer der Verschiebung (C₂) der Stollenrillen (12) mit einer Dauer der Verschiebung (C₁) der Umfangsrillen (11) synchronisiert wird, **dadurch gekennzeichnet, dass**
die Umfangsrillen (11) und die Stollenrillen (12) jeweils auf beiden Seiten einer Mittellinie im Laufflächenabschnitt (1) angeordnet sind, wobei die Dauer der Verschiebung der Umfangsrillen (11) zwischen beiden Seiten der Mittellinie verschoben ist und ein Verschiebungsbetrag (Delta) dieser Dauer auf 25 % bis 33 % der Dauer eingestellt werden kann.

2. Luftreifen nach Anspruch 1, wobei ein Neigungswinkel der Stollenrillen (12) in Bezug auf die Reifenumfangsrichtung in einem Bereich von 70° bis 90° liegt.

3. Luftreifen nach Anspruch 1 oder 2, wobei
die Stollenrillen (12) so angeordnet sind, dass eine beliebige Stollenrille (12) zumindest eine weitere Stollenrille (12) überlappt, wenn die Stollenrillen (12) in Reifenumfangsrichtung projiziert werden, und damit die beliebige Stollenrille (12) zumindest eine weitere Stollenrille (12) überlappt, wenn die Stollenrillen (12) in Reifenbreitenrichtung projiziert werden.

4. Luftreifen nach einem der Ansprüche 1 bis 3, wobei ein Verhältnis einer Gesamtfläche der Umfangsrillen (11) und Stollenrillen (12) in Bezug auf einen Bereich einer Bodenkontaktregion des Laufflächenabschnitts (1) in einem Bereich von 10 % bis 30 % liegt.

5. Luftreifen nach einem der Ansprüche 1 bis 4, wobei
eine Stollenrille (12), die einer Vertiefungsseite der Umfangsrille (11) zugewandt ist, und eine Stollenrille (12), die einem Erhöhungsabschnitt der Umfangsrille (11) zugewandt ist, in jeder Neigungsposition der Umfangsrille (11) angeordnet sind und die Stollenrille (12), die der Vertiefungsseite zugewandt ist, sich näher an der Umfangsrille (11) befindet als die Stollenrille (12), die dem Erhöhungsabschnitt zugewandt ist.

6. Luftreifen nach Anspruch 5, wobei
ein Neigungswinkel einer Rillenwandfläche der Umfangsrille (11) in Bezug auf eine Normalrichtung einer Laufflächenoberfläche des Laufflächenabschnitts (1) lokal größer ist als ein anderer Teil an einem Teil nahe der Stollenrille (12).

## Revendications

1. Pneumatique, comprenant :
une partie de bande de roulement (1) s'étendant dans une direction circonférentielle de pneumatique pour prendre une forme annulaire ;
une paire de parties de paroi latérale (2) disposées de part et d'autre de la partie de bande de roulement (1) ; et
une paire de parties de talon (3) disposées sur un côté intérieur dans une direction radiale de pneumatique des parties de paroi latérale (2) ;
dans lequel une rainure circonférentielle (11) est formée de part et d'autre de la ligne centrale de pneumatique (CL) dans la partie de bande de roulement (1), dans lequel chaque rainure circonférentielle (11), tout en s'étendant de manière continue dans la direction circonférentielle de pneumatique, est déplacée périodiquement dans une direction de largeur de pneumatique, et
une pluralité de rainures de barrette (12) avec les deux extrémités fermées s'étendant dans la direction de largeur de pneumatique est dispersée le long de la direction circonférentielle de pneumatique de part et d'autre de chaque rainure circonférentielle (11) dans la partie de bande de roulement (1), dans lequel la position des rainures de barrette (12) dans la direction de largeur de pneumatique est déplacée périodiquement le long de la direction circonférentielle de pneumatique et une période de déplacement (C₂) des rainures de barrette (12) est synchronisée avec une période de déplacement (C₁) des rainures circonférentielles (11),
**caractérisé en ce que**
les rainures circonférentielles (11) et les rainures de barrette (12) sont disposées respectivement de part et d'autre d'une ligne centrale de la partie de bande de roulement (1), la période de déplacement des rainures circonférentielles (11) est décalée entre les deux côtés de la ligne centrale, et une quantité de décalage (Δ) de cette période est ajustée pour être de 25 % à 33 % de la période.

2. Pneumatique selon la revendication 1, dans lequel un angle d'inclinaison des rainures de barrette (12) par rapport à la direction circonférentielle de pneumatique se situe dans une plage de 70° à 90°.

3. Pneumatique selon la revendication 1 ou 2, dans lequel les rainures de barrette (12) sont disposées de telle sorte qu'une rainure de barrette (12) arbitraire chevauche au moins une autre rainure de barrette (12) lorsque les rainures de barrette (12) sont projetées dans la direction circonférentielle de pneumatique et que la rainure de barrette (12) arbitraire chevauche au moins une autre rainure de barrette (12) lorsque les rainures de barrette (12) sont projetées dans la direction de largeur de pneumatique.

4. Pneumatique selon l'une quelconque des revendications 1 à 3, dans lequel un rapport de la surface totale des rainures circonférentielles (11) et des rainures de barrette (12) par rapport à une surface d'une région de contact avec le sol de la partie de bande de roulement (1) est dans une plage de 10 % à 30 %.

5. Pneumatique selon l'une quelconque des revendications 1 à 4, dans lequel une rainure de barrette (12) faisant face à une partie de creux de la rainure circonférentielle (11) et une rainure de barrette (12) faisant face à une partie de crête de la rainure circonférentielle (11) sont disposées dans chaque position d'inflexion de la rainure circonférentielle (11) et la rainure de barrette (12) faisant face à la partie de creux est plus proche de la rainure circonférentielle (11) que la rainure de barrette (12) faisant face à la partie de crête.

6. Pneumatique selon la revendication 5, dans lequel un angle d'inclinaison d'une surface de paroi de rainure de la rainure circonférentielle (11) par rapport à une direction normale d'une surface de bande de roulement de la partie de bande de roulement (1) est supérieur localement à une autre partie au niveau d'une partie proche de la rainure de barrette (12).
